# EUROPÄISCHE PATENTSCHRIFT

(11) **EP 3 810 945 B1**
(45) Veröffentlichungstag und Bekanntmachung des Hinweises auf die Patenterteilung: **13.07.2022**
(21) Anmeldenummer: 19728579.4
(22) Anmeldetag: 28.05.2019
(51) Int. Cl.: F16D 3/68

(54) **TEIL MIT EINEM ZYLINDRISCHEN BEREICH UND AXIAL HERVORSTEHENDEN TEILEN SOWIE VERFAHREN ZUM HERSTELLEN DES TEILS**
PART WITH CYLINDRICAL PART HAVING A FACE PERPENDICULAR TO THE AXIS AND PARTS EXTENDING AXIALLY THEREFROM AND A METHOF OF MAKING THE PART
PART AVEC UNE PARTIE CYLINDRIQUE ET DES PARTIES S'ÉTENDANT D'UNE FACE NORMALE ET PROCÉDÉ DE PRODUCTION DU PART

(30) Priorität: 22.06.2018 DE 102018004950
(43) Veröffentlichungstag der Anmeldung: 28.04.2021
(73) Patentinhaber: SEW-EURODRIVE GmbH & Co. KG, 76646 Bruchsal (DE)
(72) Erfinder: BRAND, Wolfgang, 76351 Linkenheim-Hochstetten (DE); RÜCK, Tobias, 75038 Oberderdingen- Flehingen (DE)
(86) Internationale Anmeldenummer: PCT/EP2019/025158
(87) Internationale Veröffentlichungsnummer: WO 2019/242882

(56) Entgegenhaltungen:
- DE-A1-102016 117 466
- GB-A- 479 629
- US-A- 519 868
- US-A- 2 092 704
- US-A- 5 090 261
- US-A- 5 139 460

## Beschreibung

Die Erfindung betrifft ein Kupplungsteil mit einem rotationssymmetrischen Bereich und einer Bearbeitungsfläche, einen Getriebemotor und Verfahren zum Herstellen eines rotationssymmetrischen Teils aus einem Rohteil.

Es ist allgemein bekannt, an einem Rohteil mittels Fräsbearbeitung eine ebene Fläche zu erzeugen. Als nachfolgender Herstellverfahrensschritt wird eine Entgratung durchgeführt.

**Aus der** GB 479 629 A1 **sind** Klauenkupplungen **zum Verbinden fluchtender Wellen bekannt.**

**Aus der** US 5 090 261 A **ist ein Getriebemotor** mit einer Klauenkupplung **bekannt.**

**Aus der** US 519 868 A **ist** ein Rollenlagerkäfig mit zwei Ringteilen bekannt, wobei axial hervorstehende Bereiche und umlaufende Ringnuten an beiden Teilen vorgesehen sind.

**Aus der** DE 10 2016 117 466 A1 **ist eine Riemenscheiben-Baugruppe** mit einer Klauenkupplung bekannt, wobei in einem Klauenkupplungsteil eine Ringnut zur Aufnahme eines Sicherungsrings vorgesehen ist.

**Aus der** US 2 092 704 A **ist eine** Klauenkupplung bekannt, wobei in beiden Klauenkupplungsteilen Ringnuten zur Aufnahme eines Sicherungselements vorgesehen sind.

Der Erfindung liegt daher die Aufgabe zugrunde, eine einfache Herstellung eines Kupplungsteils bzw. eines rotationssymmetrischen Teils zu ermöglichen.

Erfindungsgemäß wird die Aufgabe bei dem Kupplungsteil nach den in Anspruch 1, bei dem Getriebemotor nach den in Anspruch 5 und bei dem Verfahren zum Herstellen des rotationssymmetrischen Teils nach den in Anspruch 6 angegebenen Merkmalen gelöst.

Wichtige Merkmale der Erfindung bei dem Kupplungsteil sind, dass das Kupplungsteil mit einem rotationssymmetrischen Bereich und einer Bearbeitungsfläche ausgeführt ist, wobei die Bearbeitungsfläche eben ausgeführt ist, wobei die Normalenrichtung der Bearbeitungsfläche parallel zur Symmetrieachse, insbesondere Drehachse, des rotationssymmetrischen Bereichs ausgerichtet ist, wobei das Kupplungsteil eine, bezogen auf die Rotationssymmetrieachse, in Umfangsrichtung umlaufende Ringnut aufweist,
- die an der radial äußeren Mantelfläche des Teils angeordnet ist,
- welche in einem von der Bearbeitungsfläche überdeckten Umfangswinkelbereich unvollständig ist, insbesondere bis zum Nutgrund der Ringnut entfernt ist
- und welche in einem nicht von der Bearbeitungsfläche überdeckten Umfangswinkelbereich vollständig ist, insbesondere wobei die Bearbeitungsfläche an die Ringnut angrenzt und/oder in die Ringnut mündet.

Von Vorteil ist dabei, dass nach einer zunächst erfolgten Drehbearbeitung eine Ringnut erzeugbar ist und danach die Bearbeitungsfläche erzeugbar ist. Auf diese Weise ist kein Mehraufwand notwendig, da die Ringnut bei der Drehbearbeitung erzeugbar ist, also schon in derselben Aufspannung insbesondere mittels desselben Werkzeugs.

Somit ist eine abschließende Entgratung einsparbar, indem bei der vor der Fräsbearbeitung ausgeführten Drehbearbeitung eine Ringnut in das Kupplungsteil eingearbeitet wird. Denn somit ist die Auslaufkante an der Bearbeitungsfläche weniger scharf und die Gratbildung daher verhindert oder zumindest derart stark vermindert, dass eine nachfolgende Entgratung nicht mehr stattfinden muss.

Bei einer vorteilhaften Ausgestaltung ist die Bearbeitungsfläche an einer von der Ringnut überdeckten axialen Position angeordnet. Von Vorteil ist dabei, dass die Gratbildung beim Auslaufen des Fräsers an dieser Fläche verhindert ist und somit eine nachfolgende Entgratung einsparbar ist.

Erfindungsgemäß ist am rotationssymmetrischen Bereich ein axial hervorstehender Bereich angeformt, wobei zwischen dem rotationssymmetrischen Bereich und dem axial hervorstehenden Bereich ein Bereich der Ringnut angeordnet ist,

Bei einer vorteilhaften Ausgestaltung ist der vom rotationssymmetrischen Bereich überdeckte Radialabstandsbereich in dem vom axial hervorstehenden Bereich überdeckten Radialabstandsbereich enthalten oder von ihm umfasst.

Von Vorteil ist dabei, dass ein Klauenbereich mittels Fräsen aus dem Vollen herausarbeitbar ist und trotzdem eine Entgratung einsparbar ist.

Erfindungsgemäß ist das Kupplungsteil ein Klauenkupplungsteil, wobei der axial hervorstehende Bereich ein Klauenbereich ist, wobei der rotationssymmetrische Bereich ein zylindrischer oder hohlzylindrischer Bereich ist.

Von Vorteil ist dabei, dass zwischen den Klauenbereichen mittels Fräsen ein Freiraum schaffbar ist und eine Bearbeitungsfläche mittels Fräsen, Räumen, Stoßen und/oder Ziehen erzeugbar ist, deren Normalenrichtung parallel zur Symmetrieachse, insbesondere Drehachse, ausgerichtet ist.

Hierbei ist zusätzlich von Vorteil, dass die Ringnut als Schleuderkante für axial an dem Kupplungsteil entlang fließendes Öl wirksam ist. Denn das Kupplungsteil ist vorzugsweise zwischen einem mit Schmieröl zumindest teilweise befülltem Getriebe und einem dieses Getriebe antreibenden Elektromotor angeordnet. Der so gebildete Getriebemotor weist somit ein Getriebe mit Schmieröl auf und einen ölfrei zu betreibenden Elektromotor. Wenn nun Schmieröl bei einer Leckage am eintriebsseitigen Wellendichtring des Getriebes austritt und an der eintreibenden Welle entlang fließt, kann es bis zum Kupplungsteil gelangen, insbesondere bei vertikaler Montagerichtung des Getriebemotors, und wird dann von der Ringnut abgeschleudert infolge der durch das bei Betrieb in Drehbewegung versetzte Kupplungsteil auf das Schmieröl wirkenden Zentrifugalkraft. Vorteiligerweise ist am das Kupplungsteil radial umgebenden Gehäuse ein Sensor zur Detektion des abgespritzten Öls anordenbar. Somit sind schon geringe Mengen austretenden Öls detektierbar.

Bei einer vorteilhaften Ausgestaltung ist das Kupplungsteil aus Metall, insbesondere aus Stahl, gefertigt, insbesondere mittels spanender Bearbeitung, insbesondere mittels Fräsen. Von Vorteil ist dabei, dass eine Entgratung bei dieser Metallbearbeitung einsparbar ist.

Wichtige Merkmale bei dem Getriebemotor sind, dass er ein vorgenanntes Kupplungsteil aufweist, wobei die Ringnut als Schleuderkante fungiert, insbesondere zum Abschleudern von an der dem Kupplungsteil entlang sich ausbreitendem Leckageöl, insbesondere also aus dem Getriebe austretenden Schmieröl. Von Vorteil ist dabei, dass eine zwischen Getriebe und Elektromotor zwischengeordnete Klauenkupplung das Kupplungsteil als Klauenkupplungsteil aufweist und Öl, welches als Leckageöl durch eine undichte eintriebsseitige Dichtung des Getriebes austritt und an dem Kupplungsteil entlangläuft, an der Ringnut abgeschleudert und von einem dort angeordneten Sensor detektierbar ist.

Wichtige Merkmale bei dem Verfahren zum Herstellen eines Teils aus einem Rohteil sind, dass das Teil aus einem drehbearbeiteten Rohteil, also aus einem rotationssymmetrischen Rohteil herstellbar ist,
wobei in einem ersten Verfahrensschritt eine umlaufende Ringnut an der radial äußeren Fläche, insbesondere Mantelfläche, eingebracht wird,
insbesondere wobei die Ringachse der Ringnut koaxial zur Rotationssymmetrieachse des Rohteils ausgerichtet ist,

in einem nachfolgenden zweiten Verfahrensschritt eine ebene Bearbeitungsfläche, mittels Zerspanung und/oder mittels spanender Bearbeitung erzeugt wird, wobei die Normalenrichtung der Bearbeitungsfläche parallel zur Rotationssymmetrieachse des Rohteils ausgerichtet ist, wobei die Bearbeitungsfläche an einer von der Ringnut überdeckten axialen Position angeordnet ist.

Von Vorteil ist dabei, dass nach der Drehbearbeitung nur eine Ringnut auszuführen ist und nachfolgend dann die Bearbeitungsfläche mittels Fräsbearbeitung erzeugbar ist, ohne dass eine abschließende Entgratung der Kante der Bearbeitungsfläche auszuführen ist.

Weitere Vorteile ergeben sich aus den Unteransprüchen.

Die Erfindung wird nun anhand von schematischen Abbildungen näher erläutert:

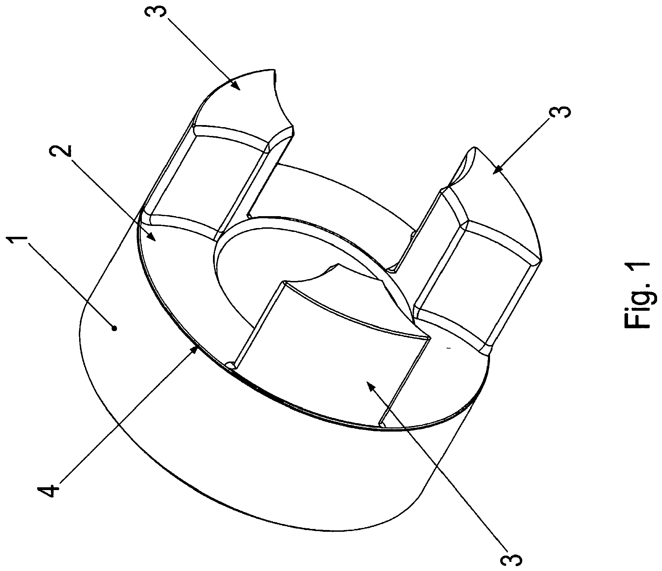

In der Figur 1 ist ein erfindungsgemäßes Klauenkupplungsteil, in Schrägansicht dargestellt.

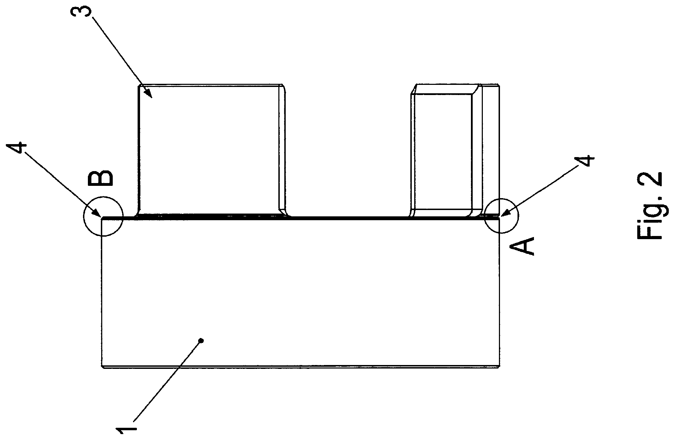

In der Figur 2 ist eine zugehörige Seitenansicht dargestellt.
In der Figur 3 ist ein vergrößerter Ausschnitt der Figur 2 dargestellt.
In der Figur 4 ist ein anderer vergrößerter Ausschnitt der Figur 2 dargestellt.

Wie in den Figuren dargestellt, weist das Kupplungsteil 1 einen zylindrischen, insbesondere also rotationssymmetrischen, Bereich auf, an dem Klauenbereiche 3 sich anschließen, insbesondere angeformt sind. Vorzugsweise ist der zylindrische Bereich als hohlzylindrischer Bereich ausgeführt.

Die Klauenbereiche sind jeweils gleichartig geformt und in Umfangsrichtung bezogen auf die Zylinderachse, also Rotationssymmetrieachse, in Umfangsrichtung voneinander regelmäßig beabstandet. Die Klauenbereiche 3 überdecken in axialer Richtung jeweils denselben axialen Bereich.

Am Fußbereich der Klauenbereiche 3, also an der axialen Position des Übergangs zwischen zylindrischem Bereich und jeweiligem Klauenbereich 3, ist eine in Umfangsrichtung umlaufende Ringnut am Kupplungsteil angeordnet.

Somit ist die Ringnut am äußeren Umfang des Kupplungsteils 1 angeordnet, insbesondere im axialen Übergangsbereich zwischen zylindrischem Bereich und Klauenbereich 3.

Eine Bearbeitungsfläche 2 ist in Umfangsrichtung zwischen zwei Klauenbereichen 3 angeordnet und eben ausgeführt. Bei der Herstellung wird der in Umfangsrichtung zwischen den Klauenbereichen 3 angeordnete Freiraum mittels spanender Bearbeitung, insbesondere mittels eines Fräsers, freigeräumt. Dabei ist die Drehachse des Fräsers parallel aber beabstandet zur Zylinderachse des zylindrischen Bereichs angeordnet.

Somit weisen die Klauenbereiche 3 an ihren in Umfangsrichtung gegenüberliegenden Seiten kreiszylindrische Seitenflächen auf.

Der Fräser bearbeitet auch die Bearbeitungsfläche 2, wobei die Schneiden des Fräsers beim Bearbeiten der Bearbeitungsfläche, also beim Zerspanen des abzutragenden Materials, an der radial äußeren Kante der Bearbeitungsfläche 2 kleine Restbereiche an Material plastisch verformend herausdrücken, so dass ein Grat gebildet würde, der aber erfindungsgemäß durch die Ringnut 4 verhindert wird.

Denn die Ringnut 4 weist schräge Nutwände auf, so dass die Schneiden des Fräsers beim Austreten aus dem Material nicht an einer 90° Kante, sondern an einer weniger scharfen Kante austreten.

Vorzugsweise ist die Bearbeitungsfläche 2 an derjenigen axialen Position angeordnet, an welcher der tiefste Punkt der Ringnut, insbesondere der Nutgrund der Ringnut, angeordnet ist.

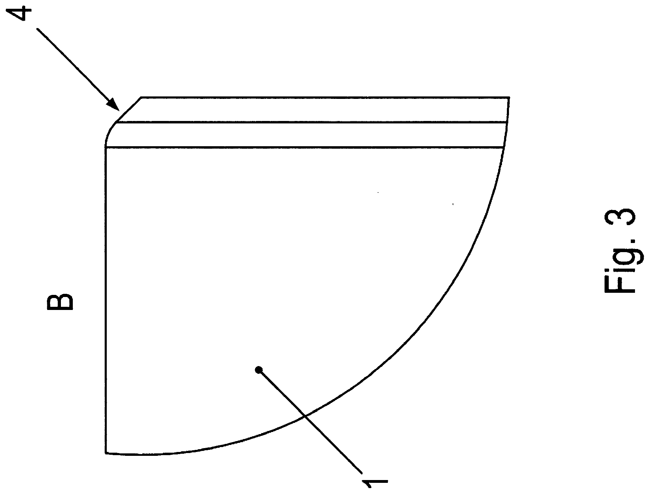

Wie in Figur 3 gezeigt, ist also nach Herstellen der Bearbeitungsfläche nur noch eine der beiden Nutwände der Ringnut vorhanden.

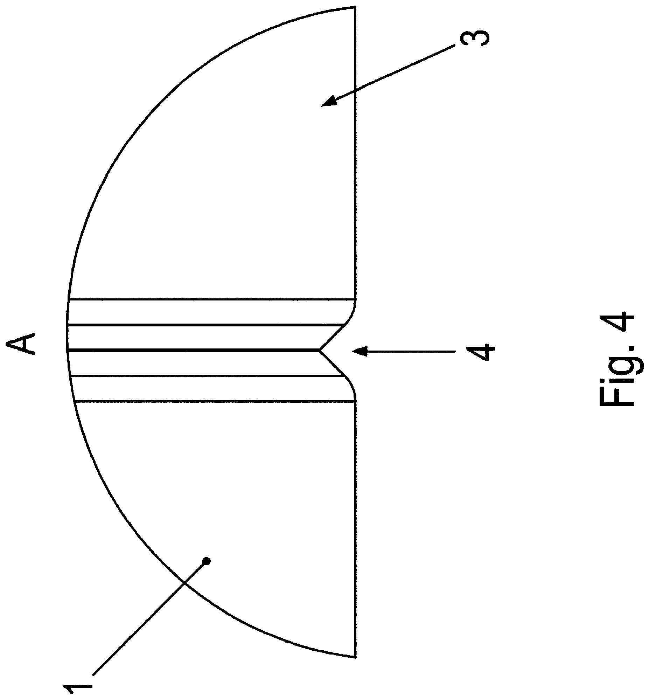

Die Ringnut 4 ist jedoch im von dem jeweiligen Klauenbereich 3 überdeckten Umfangswinkelbereich voll erhalten, wie in Figur 4 gezeigt.

Wie in Figur 4 dargestellt, ist die Ringnut 4 im Ausführungsbeispiel als V-Nut ausgeführt. Bei weiteren erfindungsgemäßen Ausführungsbeispielen wird statt der V-Nut eine Kreisnut oder eine andere Nutform verwendet. Dabei ist wichtig, dass die Nutwände stetig zum Nutgrund hin geformt sind, insbesondere also nicht senkrecht zum Nutgrund hinabfallen, sondern linear oder gekrümmt. Somit ist nach dem Bearbeiten, insbesondere durch Fräsen, Räumen, Stoßen und/oder Ziehen, ein von 90° unterschiedlicher Kantenwinkel herstellbar und daher die Bildung eines störenden Grats vermeidbar.

Bei weiteren erfindungsgemäßen Ausführungsbeispielen des Verfahrens wird statt des Kupplungsteils ein anderes rotationssymmetrisches Teil mit einer umlaufenden Ringnut ausgeführt, deren Nutgrund die selbe axiale Position aufweist wie eine Bearbeitungsfläche, welche eben ist und deren Normalenrichtung parallel ist zur Rotationssymmetrieachse des Teils.

Allgemein ausgedrückt betrifft das erfindungsgemäße Verfahren ein Drehteil, in welches eine Ringnut eingebracht ist und danach eine ebene Bearbeitungsfläche mittels Zerspanen, insbesondere Fräsen, eingebracht wird. Die Normalenrichtung der Bearbeitungsfläche ist parallel zur Drehachse ausgerichtet. Der von der Ringnut überdeckte, insbesondere bezogen auf die Drehachse, axiale Bereich enthält die axiale Position der Bearbeitungsfläche. Eine nachfoglende Entgratung entfällt.

### Bezugszeichenliste

1 Kupplungsteil
2 Bearbeitungsfläche
3 Klauenbereich
4 Ringnut

## Patentansprüche

1. Kupplungsteil (1) mit einem rotationssymmetrischen Bereich und einer Bearbeitungsfläche (2), **insbesondere einer spanend bearbeiteten Fläche,** wobei die Bearbeitungsfläche (2) eben ausgeführt ist, wobei die Normalenrichtung der Bearbeitungsfläche (2) parallel zur Rotationssymmetrieachse, insbesondere Drehachse, des rotationssymmetrischen Bereichs ausgerichtet ist, **wobei** das Kupplungsteil (1) eine, bezogen auf die **Rotationss**ymmetrieachse, in Umfangsrichtung umlaufende Ringnut (4) aufweist,
- welche in einem von der Bearbeitungsfläche (2) überdeckten Umfangswinkelbereich unvollständig ist, insbesondere bis zum Nutgrund der Ringnut (4) entfernt ist
- und welche in einem nicht von der Bearbeitungsfläche (2) überdeckten Umfangswinkelbereich vollständig ist, wobei am rotationssymmetrischen Bereich ein axial hervorstehender Bereich (3) angeformt ist,
wobei zwischen dem rotationssymmetrischen Bereich und dem axial hervorstehenden Bereich (3) ein Bereich der Ringnut (4) angeordnet ist, **die umlaufende Ringnut** (4) **an der radial äußeren Mantelfläche des** Kupplungsteils (1) **angeordnet ist, wobei das** Kupplungsteil (1) **ein Klauenkupplungsteil ist, wobei der axial hervorstehende Bereich** (3) ein **Klauenbereich ist, wobei der rotationssymmetrische Bereich ein zylindrischer oder hohlzylindrischer Bereich ist,** insbesondere wobei die Bearbeitungsfläche (2) an die Ringnut (4) angrenzt und/oder in die Ringnut (4) mündet.

2. Kupplungsteil (1) nach Anspruch 1, **dadurch gekennzeichnet, dass** die Bearbeitungsfläche (2) an einer von der Ringnut (4) überdeckten axialen Position angeordnet ist.

3. Kupplungsteil (1) nach Anspruch 1 oder 2, **dadurch gekennzeichnet, dass der vom rotationssymmetrischen Bereich überdeckte Radialabstandsbereich in dem vom axial hervorstehenden Bereich** (3) **überdeckten Radialabstandsbereich enthalten ist oder von ihm umfasst ist.**

4. Kupplungsteil (1) nach mindestens einem der vorangegangenen Ansprüche, **dadurch gekennzeichnet, dass** das Kupplungsteil (1) aus Metall, insbesondere aus Stahl, gefertigt ist, insbesondere mittels spanender Bearbeitung, insbesondere mittels Fräsen, Räumen, Stoßen oder Ziehen.

5. Getriebemotor mit einem Kupplungsteil (1) nach mindestens einem der vorangegangenen Ansprüche, **dadurch gekennzeichnet, dass** die Ringnut (4) als Schleuderkante fungiert, insbesondere zum Abschleudern von an der dem Kupplungsteil (1) entlang sich ausbreitendem Leckageöl, insbesondere also aus dem Getriebe austretenden Schmieröl.

6. Verfahren zum Herstellen eines Teils aus einem Rohteil, insbesondere wobei das Teil als Kupplungsteil (1) nach mindestens einem der vorangegangenen Ansprüche 1 bis 4 ausgeführt ist, wobei das Rohteil mittels Drehen rotationssymmetrisch erzeugt ist, in einem ersten Verfahrensschritt eine umlaufende Ringnut (4) an der radial äußeren Fläche, insbesondere Mantelfläche, eingebracht wird, insbesondere wobei die Ringachse der Ringnut (4) koaxial zur Rotationssymmetrieachse des Rohteils ausgerichtet ist, in einem nachfolgenden zweiten Verfahrensschritt eine ebene Bearbeitungsfläche (2) mittels Zerspanung und/oder mittels spanender Bearbeitung erzeugt wird, wobei die Normalenrichtung der Bearbeitungsfläche (2) parallel zur Rotationssymmetrieachse des Rohteils ausgerichtet ist. wobei die Bearbeitungsfläche (2) an einer von der Ringnut (4) überdeckten axialen Position angeordnet ist.

## Claims

1. A coupling part (1) having a rotationally-symmetrical region and a working surface (2), in particular a machined surface,
wherein the working surface (2) is plane,
wherein the normal direction of the working surface (2) is oriented parallel to the axis of rotational symmetry, in particular rotational axis, of the rotationally-symmetrical region, wherein the coupling part (1) has an annular groove (4) encircling in a circumferential direction related to the axis of rotational symmetry
- which annular groove is incomplete in a circumferential angular region covered by the working surface (2), in particular is absent as far as the groove base of the annular groove (4)
- and which annular groove is complete in a circumferential angular region not covered by the working surface (2),
wherein an axially projecting region (3) is formed at the rotationally-symmetrical region, wherein a region of the annular groove (4) is arranged between the rotationally-symmetrical region and the axially projecting region (3),
the encircling annular groove (4) is arranged at the radially outer shell surface of the coupling part (1),
wherein the coupling part (1) is a claw coupling part,
wherein the axially projecting region (3) is a claw region,
wherein the rotationally-symmetrical region is a cylindrical or hollow-cylindrical region,
in particular wherein the working surface (2) adjoins the annular groove (4) and/or opens into the annular groove (4).

2. A coupling part (1) according to claim 1,
**characterized in that**
the working surface (2) is arranged at an axial position covered by the annular groove (4).

3. A coupling part (1) according to claim 1 or 2,
**characterized in that**
the radial spacing region covered by the rotationally-symmetrical region is contained in the radial spacing region covered by the axially projecting region (3) or is encompassed by it.

4. A coupling part (1) according to at feast one of the preceding claims,
**characterized in that**
the coupling part (1) is manufactured from metal, in particular from steel, in particular by means of machining, in particular by means of milling, broaching, striking or drawing.

5. A gear motor having a coupling part (1) according to at least one of the preceding claims, **characterized in that** the annular groove (4) functions as a centrifugal edge, in particular for the centrifuging of leakage oil spreading along the coupling part (1), in particular therefore lubricating oil issuing from the gearing.

6. A method of manufacturing a part from a blank,
in particular wherein the part is in the form of a coupling part (1) according to at least one of the preceding claims 1 to 4,
wherein the blank is produced in a rotationally-symmetrical manner by means of turning,
in a first method step, an encircling annular groove (4) is made at the radially outer surface, in particular shell surface,
in particular wherein the annular axis of the annular groove (4) is oriented coaxially with the axis of rotational symmetry of the blank,
in a subsequent second method step, a plane working surface (2) is produced by means of chip removal and/or by means of machining,
wherein the normal direction of the working surface (2) is oriented parallel to the axis of rotational symmetry of the blank,
wherein the working surface (2) is arranged at an axial position covered by the annular groove (4).

## Revendications

1. Partie d'accouplement (1) comprenant une région à symétrie de révolution et une surface d'usinage (2),
en particulier une surface usinée par enlèvement de copeaux,
laquelle surface d'usinage (2) est de réalisation plane,
la direction de la normale à ladite surface d'usinage (2) étant orientée parallèlement à l'axe de symétrie de révolution,
notamment à l'axe de rotation de la région à symétrie de révolution,
la partie d'accouplement (1) étant munie d'une rainure annulaire (4) qui s'étend circonférentiellement dans la direction périphérique par rapport audit axe de symétrie de révolution,
- n'est pas pratiquée intégralement, notamment pas dépouillée jusqu'au fond de ladite rainure annulaire (4) dans une plage d'angles circonférentiels couverte par la surface d'usinage (2)
- et est intégrale dans une plage d'angles circonférentiels non couverte par ladite surface d'usinage (2),
sachant qu'une région (3), axialement en saillie, fait corps avec la région à symétrie de révolution,
une zone de ladite rainure annulaire (4) étant interposée entre ladite région à symétrie de révolution et ladite région (3) axialement en saillie,
ladite rainure annulaire circonférentielle (4) étant située au niveau de la surface de l'enveloppe radialement extérieure de ladite partie d'accouplement (1),
laquelle partie d'accouplement (1) est une partie d'un accouplement à crabots,
ladite région (3) axialement en saillie étant une zone d'agriffage,
la région à symétrie de révolution étant une région cylindrique, ou cylindrique creuse, sachant notamment que la surface d'usinage (2) est limitrophe de la rainure annulaire (4) et/ou débouche dans ladite rainure annulaire (4).

2. Partie d'accouplement (1) selon la revendication 1,
**caractérisée par le fait que**
la surface d'usinage (2) occupe un emplacement axial couvert par la rainure annulaire (4).

3. Partie d'accouplement (1) selon la revendication 1 ou 2,
**caractérisée par le fait que**
la zone d'espacement radial, couverte par la région à symétrie de révolution, est incluse dans la zone d'espacement radial couverte par la région axialement en saillie, ou est englobée par ladite zone.

4. Partie d'accouplement (1) selon au moins l'une des revendications précédentes,
**caractérisée par le fait que**
ladite partie d'accouplement (1) est fabriquée en métal, notamment en acier, en particulier au moyen d'un usinage par enlèvement de copeaux, notamment au moyen d'un fraisage, d'un brochage, d'un mortaisage ou d'un emboutissage.

5. Moteur de transmission muni d'une partie d'accouplement (1) conforme à au moins l'une des revendications précédentes,
**caractérisé par le fait que**
la rainure annulaire (4) remplit la fonction d'une arête d'éjection notamment conçue pour éliminer, par centrifugation, une huile de fuite se propageant le long de la partie d'accouplement (1), c'est-à-dire, en particulier, d'une huile de lubrification sortant de la transmission.

6. Procédé de fabrication d'une pièce à partir d'une ébauche,
laquelle pièce est réalisée sous la forme d'une partie d'accouplement (1) conforme à au moins l'une des revendications précédentes 1 à 4,
ladite ébauche étant produite par tournage, avec symétrie de révolution,
une rainure annulaire circonférentielle (4) étant pratiquée, lors d'une première étape opératoire, au niveau de la surface radialement extérieure,
en particulier de la surface de l'enveloppe,
sachant notamment que l'axe de l'anneau de ladite rainure annulaire (4) est orienté coaxialement à l'axe de symétrie de révolution de l'ébauche,
une surface plane d'usinage (2) étant produite, lors d'une seconde étape opératoire consécutive, au moyen d'un enlèvement de matière et/ou au moyen d'un usinage par enlèvement de copeaux,
sachant que la direction de la normale à ladite surface d'usinage (2) est orientée parallèlement audit axe de symétrie de révolution de l'ébauche,
ladite surface d'usinage (2) occupant un emplacement axial couvert par ladite rainure annulaire (4).
